# EUROPEAN PATENT APPLICATION

(11) **EP 1 849 749 A1**
(43) Date of publication of application: **31.10.2007**
(21) Application number: 05709811.3
(22) Date of filing: 07.02.2005
(51) Int. Cl.: C02F 1/68, F25C 1/00

(54) **REDUCING ICE AND PROCESS FOR PRODUCING REDUCING LIQUID WITH USE OF THE ICE**

(71) Applicant: Murota, Wataru, Kahoku-gun, Ishikawa 929-0324 (JP)
(72) Inventor: Murota, Wataru, Kahoku-gun, Ishikawa 929-0324 (JP)
(74) Representative: Chapple, Colin Richard
(86) International application number: PCT/JP2005/001759
(87) International publication number: WO 2006/082654

(57) **Abstract**

A reducing ice that after dissolution, exhibits an oxidation-reduction potential of -10 to -2000 mV. The pH value after dissolution is preferably ≦ 9, and the ice can consist of a member selected from among seawater, deionized marine deep water, mineral water, tapwater, purified tapwater, well water, rainwater, tea, coffee and juice. As the reducing ice even after dissolution has an extremely low oxidation-reduction potential, any liquid can be converted to a reducing liquid by addition of the reducing ice thereto.

## Description

### TECHNICAL FIELD

The invention of the application relates to a novel reducing ice and a process for producing a reducing liquid using the ice. The invention of the application more specifically relates to a reducing ice containing hydrogen, to a novel reducing ice having a low oxidation-reduction potential, and a method for producing a reducing liquid using this ice.

### BACKGROUND ART

It is known that ionized alkali water has health benefits. It is also known that ionized alkali water has an exceptional effect in beautifying and preserving the skin (e.g., for blotching, freckles, wrinkles, acne, and rashes), as well as for various diseases caused by active oxygen and lipoperoxides (e.g., cerebral apoplexy, cardiac infarction, arteriosclerosis, cancer, hyperlipidemia, diabetes, hepatitis, nephritis, ulceration, gastric mucosa lesions, pneumonia, cataracts, retinal pigment degeneration, detached retina, connective tissue disease and other autoimmunological diseases, rheumatoid arthritis, AIDS, Parkinson's disease, Alzheimer's disease, allergies such as eczema and hay fever, high blood pressure, enlargement of the prostate, and asthma) (see Patent Reference 1 below). Ionized alkali water is also known to have effects of suppressing metastasis of cancer cells (see Patent References 2 and 3 below). Ionized alkali water generators for producing ionized alkali water are in widespread use.

Tap water, saline solutions, and NaOH aqueous solutions are electrolyzed using an anode and a cathode to form acidic water on the anode side and alkaline water on the cathode side. The alkaline water on the cathode side is used for the known varieties of ionized alkali water indicated above. The alkaline water on the cathode side contains a large number of hydroxide ions (OH), and the hydrogen gas generated by electrolysis of the water is dissolved. Accordingly, the water has reducing properties and is therefore also known as "alkali reducing water."

The resulting ionized alkali water exhibits a low oxidation-reduction potential, exhibits a reducing force, and has a normal alkalinity of pH of 9 or higher. However, when water having a low oxidation-reduction potential and high reducing power is to be obtained, the hydroxyl ion (OH⁻) concentration increases proportionately, and non-potable alkaline water having a pH of 10 or higher is obtained. Furthermore, ionized alkali water is known to have health benefits, and since gastric juices are acidic, the pH of ionized alkali water will be too high (about 9) to be used daily in large quantities for drinking or cooking. A problem accordingly arises in that the water, conversely, does not provide a health benefit, and is unsuitable for use.

The present inventors succeeded in developing a reducing water having a nearly neutral pH of 9.0 or less while also having a low oxidation-reduction potential and a strong reducing property, as described in the Patent References 4 and 5 below. The invention relates to a reducing water that has a pH of 9.0 or less and an oxidation-reduction potential of -10 mV or less to -2000 mV or more at a normal temperature and pressure.

Patent Reference 1: Japanese Laid-open Patent Application No. 2001-145880
Patent Reference 2: Japanese Laid-open Patent Application No. 2001-137852
Patent Reference 3: Japanese Laid-open Patent Application No. 2002-254078
Patent Reference 4: Japanese Laid-open Patent Application No. 2004-230370
Patent Reference 5: Japanese Laid-open Patent Application No. 2004-351399

### DISCLOSURE OF THE INVENTION

### [Problems the Invention Is Intended To Solve]

However, when the reducing water described above is left in an opened state, oxygen from the ambient air will be assimilated into the water. As a result, the oxidation-reduction potential will gradually increase and the reducing property will be compromised. Specifically, the data shown in Table 1 below, which corresponds to Working Example 5 (Sample 1) and Working Example 6 (Sample 2) in Patent Reference 4, shows the change in the oxidation-reduction potential after the reducing water is kept in a closed state for 20 hours directly after being produced, and then left exposed to ambient air. According to the data in Table 1, the oxidation-reduction potential of the resulting reducing water remains low even after having been in a closed state for 20 hours. When the reducing water is then kept in an open state, however, the oxidation-reduction potential gradually increases.

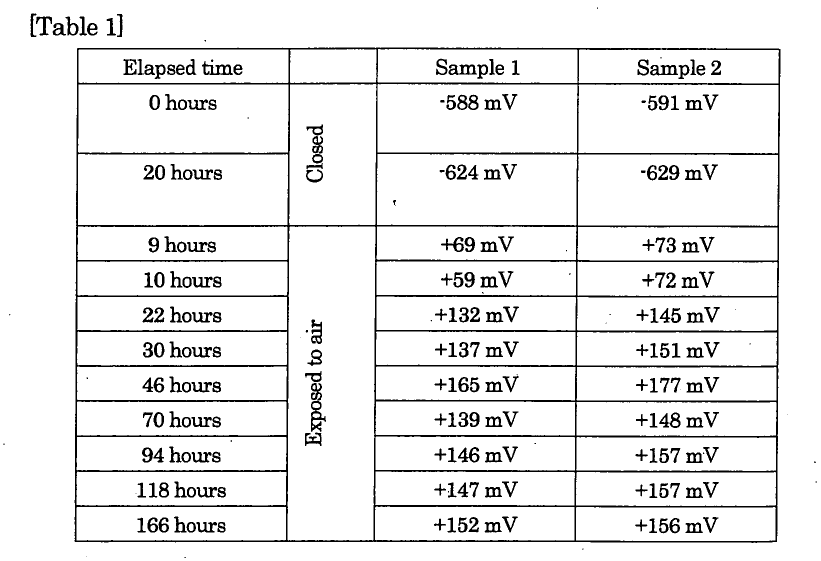

Accordingly, a problem arises in that when the reducing water disclosed in Patent References 4 and 5 is not stored in a closed container, the physical properties thereof cannot be preserved over long periods of time. The inventors perfected the present invention as a result of carrying out varied investigations in order to solve the problems of the reducing water of Patent References 4 and 5 above. They discovered that reducing ice can be obtained by producing reducing water according to the method disclosed in Patent References 4 and 5, and immediately cooling and freezing the resulting reducing water. The dissolution rate of oxygen in the ice will be lower than the dissolution rate in water, for which reason the oxidation-reduction potential will not increase even when the ice is left open to the air, and a low oxidation-reduction potential can be maintained over a long period of time.

Specifically, a first object of the present invention is to provide a reducing ice able to maintain a low oxidation-reduction potential as long as the ice does not melt into a liquid, even if left open to the air.

### [Means for Solving the Abovementioned Problems]

According to a first aspect of the present invention, there is provided a reducing ice that, after dissolution, exhibits an oxidation-reduction potential of -10 to -2000 mV. This reducing ice can be stored for a long period of time while the reducing property thereof is maintained, as long as the ice has not melted. This reducing ice is preferred because a lower oxidation-reduction potential corresponds to a stronger reducing property. However, it is difficult to obtain a reducing ice that, after dissolution, exhibits an oxidation-reduction potential of -1000 mV and at a normal temperature and pressure, for which reason the oxidation-reduction potential of the reducing ice is preferably within a range of -100 to 1000 mV. According to the reducing ice of the invention, it is possible to delay the oxidation of the object to be cooled thereby, and, when transported, the reducing water is cooled, whereby the need for a closed container is obviated. Transportation costs are accordingly reduced.

According to this aspect, the pH of the reducing ice after dissolution is preferably 9 or less. If the pH is 9 or less after dissolution; the ice will not cause any health problems, and can be used in large quantities as a reducing water for cooking and drinking purposes. According to the present invention, it is difficult to obtain a reducing water having a low oxidation-reduction potential following a decrease in the pH after dissolution. However, a reducing water having a sufficiently low oxidation-reduction potential can be obtained with a pH of up to approximately 5. According to present tap water quality standards, a pH of 5.8 or greater and 8.6 or less is preferable for drinking. However, in the present invention, it is possible to provide a reducing ice yielding a reducing water having a sufficiently low oxidation-reduction potential while still fulfilling tap water quality standards.

In the present invention, the ice can comprise a member selected from among seawater, deionized marine deep water, mineral water, tap water, purified tap water, well water, rainwater, tea, coffee, and juice. When composed of seawater, the ice can be used to refrigerate seafood or other articles to be cooled, and the oxidation of the cooled object can be delayed. When composed of some other liquid, the ice is melted so as to readily yield an immediately potable reducing liquid.

According to another aspect of the present invention, there is provided a method for producing a reducing liquid characterized in that a reducing ice that, after dissolution, exhibits an oxidation-reduction potential of -10 to -2000 mV is added to a liquid.

According to the invention of this aspect, it is possible to maintain the reducing property of the reducing ice over a long period of time provided that the ice has not melted, and merely adding the reducing ice to a liquid lowers the oxidation-reduction potential of the liquid and imparts same with a reducing property. It is thereby possible to readily produce the desired amount of reducing liquid on demand.

According to this aspect, the liquid to which the reducing ice is added is preferably seawater, deionized marine deep water, mineral water, tap water, purified tap water, well water, rainwater, tea, coffee, or juice. According to this configuration, it is possible to readily obtain seawater, deionized marine deep water, mineral water, tap water, purified tap water, well water, rainwater, tea, coffee, and juice having a reducing property. Reducing sea water can be used to cool sea food or another article to be cooled, and delay the oxidation of the cooled object. When another liquid is used, it is possible to obtain a reducing liquid that is suitable for drinking.

### BEST MODE FOR CARRYING OUT THE INVENTION

The best mode for carrying out the present invention will be described hereinafter with reference to working examples. First, a reducing water having a pH of 7.0 and an oxidation-reduction potential of -532 mV was obtained in the same manner as the invention disclosed in Patent References 4 and 5. A reducing ice of the present invention was then obtained by storing the reducing water in a closed container in a freezer, and letting it freeze.

The reducing ice was then retrieved from the closed container, the temperature was changed from room temperature to 1°C so that the ice would not readily melt, and the ice was left open to the air along with the reducing water. After a prescribed period of time, a prescribed amount of reducing water and reducing ice was retrieved and left to stand at room temperature to melt the reducing ice. The oxidation-reduction potential and pH were measured when the water had reached a temperature of 23°C. The results are collectively shown in Table 2. The oxidation-reduction potential and pH were measured using an ORP meter and a pH meter (both manufactured by the DDK Toa Corporation).

**[Table 2]**

| Elapsed time | Reducing water in an open state | | Reducing ice in an open state | |
|---|---|---|---|---|
| | Oxidation-reduction potential | pH | Oxidation-reduction potential | pH |
| O hours | -532 mV | 7.0 | -532 mV | 7.0 |
| 6 hours | -188 mV | 7.0 | -531 mV | 7.0 |
| 12 hours | -20 mV | 7.0 | -531 mV | 7.0 |
| 24 hours | +155 mV | 7.0 | -532 mV | 7.0 |

As is evident from the results shown in Table 2, the oxidation-reduction potential gradually increases in the conventional reducing water when the water is left open to the air, but the reducing ice of the present invention maintains its original oxidation-reduction potential as long as the ice does not melt, even when left in ambient air.

## Claims

1. A reducing ice that, after dissolution, exhibits an oxidation-reduction potential of-10 to-2000 mV.

2. The reducing ice according to claim 1, **characterized in that** a pH value after dissolution is 9 or less.

3. The reducing ice according to claims 1 or 2, **characterized in** comprising a member selected from among seawater, deionized marine deep water, mineral water, tap water, purified tap water, well water, rainwater, tea, coffee, and juice.

4. A method for producing a reducing liquid, **characterized in that** reducing ice that after dissolution exhibits an oxidation-reduction potential of -10 to -2000 mV is added to a liquid.

5. The method for producing a reducing liquid according to claim 4, **characterized in that** the liquid to which said reducing ice is added comprises a member selected from among seawater, deionized marine deep water, mineral water, tap water, purified tap water, well water, rainwater, tea, coffee, and juice.
